# EUROPÄISCHE PATENTSCHRIFT

(11) **EP 3 976 991 B1**
(45) Veröffentlichungstag und Bekanntmachung des Hinweises auf die Patenterteilung: **22.07.2026**
(21) Anmeldenummer: 20730399.1
(22) Anmeldetag: 24.05.2020
(51) Int. Cl.: F16F 13/10, B60K 5/12

(54) **HYDRAULISCH DÄMPFENDES AGGREGATLAGER**
HYDRAULIC DAMPING MOUNT
SUPPORT ANTIVIBRATOIRE HYDRAULIQUE

(30) Priorität: 28.05.2019 DE 102019114363
(43) Veröffentlichungstag der Anmeldung: 06.04.2022
(73) Patentinhaber: BOGE Elastmetall GmbH, 49401 Damme (DE)
(72) Erfinder: SCHÄFER, Christof, 53489 Sinzig (DE)
(74) Vertreter: Bossmeyer, Jörg Peter
(86) Internationale Anmeldenummer: PCT/EP2020/064352
(87) Internationale Veröffentlichungsnummer: WO 2020/239652

(56) Entgegenhaltungen:
- EP-A1- 0 527 302
- EP-A1- 0 565 860
- EP-A1- 3 290 739
- DE-A1- 102016 120 959

## Beschreibung

Die Erfindung betrifft ein hydraulisch dämpfendes Aggregatlager mit zwei in einer axialen Richtung einander gegenüberliegenden, mit Fluid gefüllten und durch wenigstens einen Kanal hydraulisch miteinander verbundenen Kammern, von denen eine erste Kammer eine von einem Tragfederkörper umschlossene Arbeitskammer und eine zweite Kammer eine von einem Balg umschlossene Ausgleichskammer bildet, der eine einen Innenraum umringende und sich in axialer Richtung erstreckende Innenwandung aufweist, und einem in axialer Richtung zwischen der Arbeitskammer und der Ausgleichskammer angeordneten Ringkörper, der eine in die Arbeitskammer einmündende axiale Durchgangsöffnung umschließt, die von einer einteilig mit der Innenwandung des Balgs ausgebildeten Membran verschlossen ist, die einen durch die Innenwandung definierten und/oder begrenzten Zentralbereich aufweist, der zusammen mit der Innenwandung den Innenraum begrenzt.

Die EP 0 565 860 A1 betrifft ein hydraulisch dämpfendes Gummilager mit zwei in Axialrichtung einander gegenüberliegenden, starren Stirnwänden und wenigstens zwei axial hintereinander angeordneten, Dämpfungsflüssigkeit enthaltenden Kammern, von denen mindestens eine eine als gummielastisches Federelement ausgebildete Umfangswand aufweist, wobei die Kammern über mindestens eine in einer Trennwand angeordnete Drosselstelle miteinander in Verbindung stehen, und wobei mindestens ein Teil von mindestens einer Kammer und mindestens ein Teil der Trennwand als einteiliges Bauteil ausgebildet sind, welches als Entkopplungsmembran, als Ausgleichsraum und als Abdichtung und Befestigungselement ausgebildet ist.

Die EP 0 527 302 A1 offenbart ein Gummilager mit hydraulischer Dämpfung, umfassend ein Traglager und ein Auflager, die durch ein Federelement aus gummielastischem Werkstoff verbunden sind und einen flüssigkeitsgefüllten Arbeitsraum umschließen, der durch eine an dem Traglager festgelegte Trennwand von einem Ausgleichsraum getrennt ist, wobei die Trennwand von zumindest einer Verbindungsöffnung durchdrungen und in einem Teilbereich durch einen nachgiebigen Wandabschnitt gebildet ist. Der Ausgleichsraum ist durch eine an dem Traglager festgelegte Membran nach außen abgeschlossen, wobei der Wandabschnitt und die Membran durch ein einstückig ineinander übergehendes Formteil gebildet sind und wobei das Formteil und die Trennwand in der Zwischenzone zwischen dem Wandabschnitt und der Membran im Wesentlichen flüssigkeitsdicht verbunden sind. Das Formteil weist im Bereich des Wandabschnittes einen mit einer Hinterschneidung versehenen Vorsprung auf und ist mit der Hinterschneidung in eine Durchbrechung der Trennwand eingeknüpft.

Die DE 10 2016 120 959 A1 offenbart ein hydraulisch dämpfendes Lager zur Lagerung eines Kraftfahrzeugaggregats, insbesondere zur Lagerung eines Kraftfahrzeugmotors an einer Kraftfahrzeugkarosserie, mit einer Tragfeder, die einen Lagerkern abstützt und eine Arbeitskammer umschließt, und einer Ausgleichskammer, die von der Arbeitskammer durch eine Trennwand getrennt und durch eine Ausgleichsmembran begrenzt ist. Die Ausgleichskammer und die Arbeitskammer sind mit einem Fluid gefüllt und über einen in die Trennwand eingebrachten Dämpfungskanal miteinander verbunden, wobei die Trennwand eine Membran aufweist, die schwingungsfähig aufgenommen ist und der ein Schaumstoffelement zugeordnet ist, das die Membran bei einer Auslenkung abstützt. Nachteilig an diesem Lager ist, dass zur Erzielung der gewünschten dynamischen Steifigkeiten zusätzliche Bauteile, wie das Schaumstoffelement und eine Halterung für das Schaumstoffelement erforderlich sind. Dies erhöht nicht nur die Anzahl der Teile und somit den Aufwand zur Herstellung dieser Teile, sondern auch die Anzahl der Montageschritte.

Ausgehend hiervon liegt der Erfindung die Aufgabe zugrunde, bei einem hydraulisch dämpfenden Aggregatlager gewünschte Steifigkeiten mit möglichst wenig zusätzlichen Bauteilen erzielen zu können.

Diese Aufgabe wird erfindungsgemäß durch ein hydraulisch dämpfendes Aggregatlager nach Anspruch 1 gelöst. Bevorzugte Weiterbildungen der Erfindung sind in den Unteransprüchen und in der nachfolgenden Beschreibung gegeben.

Das eingangs genannte hydraulisch dämpfende Aggregatlager mit zwei in einer axialen Richtung einander gegenüberliegenden, mit Fluid gefüllten und durch wenigstens einen Kanal hydraulisch miteinander verbundenen Kammern, von denen eine erste Kammer eine von einem Tragfederkörper umschlossene Arbeitskammer und eine zweite Kammer eine von einem Balg umschlossene Ausgleichskammer bildet, der eine einen Innenraum umringende und sich in axialer Richtung erstreckende Innenwandung aufweist, und einem in axialer Richtung zwischen der Arbeitskammer und der Ausgleichskammer angeordneten Ringkörper, der eine in die Arbeitskammer einmündende axiale Durchgangsöffnung umschließt, die von einer einteilig mit der Innenwandung des Balgs ausgebildeten Membran verschlossen ist, die einen durch die Innenwandung definierten und/oder begrenzten Zentralbereich aufweist, der zusammen mit der Innenwandung den Innenraum begrenzt, ist erfindungsgemäß insbesondere dadurch weitergebildet, dass die Membran einen den Zentralbereich umringenden und einteilig mit diesem ausgebildeten Kragenbereich aufweist, der an seinem Außenumfang fest mit dem Ringkörper und/oder mit dem Tragfederkörper verbunden ist.

Durch den Kragenbereich, insbesondere in Kombination mit der einteiligen Ausbildung von Membran und Innenwand und/oder Balg, ist es möglich, das, vorzugsweise dynamische und/oder statische, Steifigkeitsverhalten des hydraulisch dämpfenden Aggregatlagers zu beeinflussen. Beispielsweise ist es möglich, eine selbstregulierende Funktion zu erzielen, was herkömmlich nur durch den Einsatz einer das Schwingungsverhalten der Membran beeinflussenden aktiven Vorrichtung erzielbar ist. Bevorzugt ist es aber möglich, auch für das erfindungsmäße hydraulisch dämpfende Aggregatlager eine das Schwingungsverhalten der Membran beeinflussende aktive Vorrichtung, wie z.B. einen Aktor oder eine Schaltvorrichtung, vorzusehen, die z.B. in dem Innenraum angeordnet ist.

Bevorzugt ist dem hydraulisch dämpfenden Aggregatlager eine axiale Mittelachse zugeordnet. Vorzugsweise ist dem Innenraum eine axiale Mittelachse zugeordnet. Die oder eine axiale Mittelachse des Innenraums fällt bevorzugt mit der oder einer axialen Mittelachse des hydraulisch dämpfenden Aggregatlagers zusammen. Die axiale Mittelachse des Innenraums und/oder die axiale Mittelachse des hydraulisch dämpfenden Aggregatlagers wird oder werden, vorzugsweise somit, insbesondere auch als Mittelachse bezeichnet. Eine oder jedwede quer zur axialen Richtung und/oder zur Mittelachse verlaufende Richtung wird insbesondere als radiale Richtung bezeichnet.

Die Membran ist bevorzugt elastisch und/oder flexibel. Vorzugsweise ist der Zentralbereich elastisch und/oder flexibel. Vorteilhaft ist der Kragenbereich elastisch und/oder flexibel. Insbesondere ist die Membran einteilig mit dem Balg ausgebildet. Vorzugsweise ist die Innenwandung elastisch und/oder flexibel. Vorteilhaft ist der Balg elastisch und/oder flexibel.

Gemäß einer Ausgestaltung weist die Innenwandung, vorzugsweise in axialer Richtung, eine oder wenigstens eine, vorteilhaft um die oder eine axiale Mittelachse des Innenraums herum verlaufende, Ausbeulung auf. Die oder die wenigstens eine Ausbeulung ist bevorzugt eine oder wenigstens eine radiale Ausbeulung und/oder durch eine oder wenigstens eine, insbesondere bereichsweise, Vergrößerung des Durchmessers des Innenraums gebildet. Vorzugsweise ist die Innenwandung im Bereich der oder der wenigstens einen Ausbeulung, insbesondere radial, in die Ausgleichskammer hinein gewölbt und/oder aus dem Innenraum heraus gewölbt.

Gemäß einer Weiterbildung weist die Innenwandung, vorzugsweise in axialer Richtung, eine oder wenigstens eine, vorteilhaft um die oder eine axiale Mittelachse des Innenraums herum verlaufende, Einbuchtung auf, die sich bevorzugt, insbesondere axial, an die Ausbeulung anschließt. Durch die oder die wenigstens eine Einbuchtung, z.B. durch deren Positionierung und/oder geometrische Ausgestaltung, ist es insbesondere möglich, das, vorzugsweise dynamische und/oder statische, Steifigkeitsverhalten des hydraulisch dämpfenden Aggregatlagers, insbesondere zusätzlich, zu beeinflussen. Die oder die wenigstens eine Einbuchtung ist bevorzugt eine oder wenigstens eine radiale Einbuchtung und/oder durch eine oder wenigstens eine, insbesondere bereichsweise, Verringerung des Durchmessers des Innenraums gebildet. Vorzugsweise ist die Innenwandung im Bereich der oder der wenigstens einen Einbuchtung, insbesondere radial, in den Innenraum hinein gewölbt und/oder aus der Ausgleichskammer heraus gewölbt. Vorteilhaft sind die oder die wenigstens eine Ausbeulung und die oder die wenigstens eine Einbuchtung, insbesondere in radialer Richtung, einander entgegengesetzt gewölbt. Die oder die wenigstens eine Einbuchtung bildet z.B. eine oder wenigstens eine Taille und/oder Einschnürung. Bevorzugt gehen die oder die wenigstens eine Ausbeulung und die oder die wenigstens eine Einbuchtung, insbesondere in axialer Richtung, ineinander über. Vorzugsweise verläuft die Innenwandung in axialer Richtung wellenförmig.

Gemäß einer Ausgestaltung schließt sich der Kragenbereich, insbesondere radial und/oder unmittelbar an den Zentralbereich an. Bevorzugt erstreckt sich der Kragenbereich, insbesondere radial, über die Innenwandung und/oder über den oder einen Verbindungsbereich, in welchem die Innenwandung mit dem Zentralbereich und/oder mit der Membran verbunden ist, hinaus. Vorzugsweise greift die Innenwandung, insbesondere auf einer der Arbeitskammer und/oder dem Ringkörper und/oder der Durchgangsöffnung abgewandten Seite der Membran, am Übergang zwischen dem Zentralbereich und dem Kragenbereich und/oder im Verbindungsbereich an der Membran an. Vorteilhaft umringt der Kragenbereich die Mittelachse. Beispielsweise weist der Balg den Kragenbereich auf. Insbesondere ist der Kragenbereich einteilig mit dem Balg ausgebildet. Bevorzugt ist die Membran an ihrem Außenumfang mit dem Ringkörper und/oder dem Tragfederkörper fest verbunden. Vorzugsweise bildet der Außenumfang des Kragenbereichs den Außenumfang der Membran. Vorteilhaft ist der Kragenbereich und/oder die Membran ausschließlich oder lediglich an seinem oder ihrem Außenumfang mit dem Ringkörper und/oder dem Tragfederkörper fest verbunden. Bevorzugt ist die Membran, insbesondere ausschließlich oder lediglich, dadurch mit dem Ringkörper und/oder dem Tragfederkörper fest verbunden, dass der Kragenbereich an seinem Außenumfang mit dem Ringkörper und/oder dem Tragfederkörper fest verbunden ist. Vorzugsweise ist die Membran und/oder der Kragenbereich, insbesondere ausschließlich oder lediglich, an oder mit ihrem oder seinem Außenumfang an dem Ringkörper und/oder dem Tragfederkörper befestigt oder festgelegt. Vorteilhaft ist die Membran, insbesondere ausschließlich oder lediglich, dadurch mit dem Ringkörper und/oder dem Tragfederkörper fest verbunden und/oder an dem Ringkörper und/oder dem Tragfederkörper befestigt oder festgelegt, dass der Kragenbereich an seinem Außenumfang an dem Ringkörper und/oder dem Tragfederkörper befestigt oder festgelegt ist. Bevorzugt ist der Kragenbereich im, vorzugsweise radialen, Abstand zum Zentralbereich, an dem Ringkörper und/oder dem Tragfederkörper befestigt oder festgelegt. Vorzugsweise geht der Zentralbereich, insbesondere in radialer Richtung, bevorzugt stoffschlüssig, in den Kragenbereich über. Vorteilhaft erweitert der Kragenbereich den Zentralbereich, insbesondere in radialer Richtung. Erfindungsgemäß bilden der Zentralbereich und der Kragenbereich gemeinsam die Membran. Erfindungsgemäß ist die Membran in axialer Richtung gegenüber dem Ringkörper bewegbar.

Vorzugsweise bildet der Zentralbereich einen, insbesondere radial, inneren oder zentralen Teil der Membran. Bevorzugt ist die Membran einteilig mit dem Balg ausgebildet. Insbesondere ist der Zentralbereich und/oder der Kragenbereich und/oder die Membran, vorzugsweise im radialen Abstand zum Außenumfang des Kragenbereichs oder der Membran und/oder in axialer Richtung, relativ zu oder gegenüber dem Ringkörper und/oder dem Tragfederkörper schwingungsfähig und/oder bewegbar und/oder elastisch bewegbar. Vorteilhaft ist der Kragenbereich an seinem Außenumfang und/oder die Membran an ihrem Außenumfang mit dem Ringkörper und/oder dem Tragfederkörper verbunden und/oder an dem Ringkörper und/oder dem Tragfederkörper befestigt oder festgelegt, sodass der Zentralbereich und/oder der Kragenbereich und/oder die Membran, vorzugsweise im radialen Abstand zum Außenumfang des Kragenbereichs oder der Membran und/oder in axialer Richtung, relativ zu oder gegenüber dem Ringkörper und/oder dem Tragfederkörper schwingungsfähig und/oder bewegbar und/oder elastisch bewegbar ist. Beispielsweise ist der Zentralbereich und/oder die Membran in der Durchgangsöffnung angeordnet. Bevorzugt ist der Zentralbereich und/oder der Kragenbereich und/oder die Membran auf einer der Arbeitskammer abgewandten Seite der Durchgangsöffnung angeordnet. Erfindungsgemäß ist die Membran scheibenförmig ausgebildet. Beispielsweise ist der Kragenbereich ringförmig oder ringscheibenförmig ausgebildet. Insbesondere weist oder weisen der Zentralbereich und/oder der Kragenbereich und/oder die Membran, vorzugsweise jeweils, eine kreisförmige Außenumfangskontur auf. Vorteilhaft weist der Kragenbereich eine kreisförmige Innenumfangskontur auf. Vorzugsweise ist oder sind der Zentralbereich und/oder der Kragenbereich und/oder die Membran, bevorzugt im radialen Abstand zum Außenumfang des Kragenbereichs und/oder der Membran, auf seiner oder ihrer der Arbeitskammer zugewandten Seite axial an dem Ringkörper abgestützt oder abstützbar. Vorteilhaft ist oder sind der Zentralbereich und/oder der Kragenbereich und/oder die Membran, bevorzugt im radialen Abstand zum Außenumfang des Kragenbereichs und/oder der Membran, auf seiner oder ihrer der Arbeitskammer abgewandten Seite, nicht axial an dem Ringkörper abgestützt oder abstützbar. Insbesondere ist oder sind der Zentralbereich und/oder der Kragenbereich und/oder die Membran, bevorzugt im, vorzugsweise radialen, Abstand zum Außenumfang des Kragenbereichs und/oder der Membran, vorteilhaft auf der einer der Arbeitskammer abgewandten Seite des Ringkörpers, bevorzugt in axialer Richtung, von dem Ringkörper weg bewegbar und/oder relativ zu dem Ringkörper bewegbar und/oder schwingungsfähig. Erfindungsgemäß können der Kragenbereich und der Zentralbereich, insbesondere somit, bevorzugt im, vorzugsweise radialen, Abstand zum Außenumfang des Kragenbereichs und/oder der Membran, erfindungsgemäß in axialer Richtung, von dem Ringkörper abheben.

Bevorzugt sind die beiden Kammern durch den Ringkörper und/oder durch den Zentralbereich und/oder durch den Kragenbereich und/oder durch die Membran voneinander getrennt.

Gemäß einer Weiterbildung ist die Innenwandung bezüglich der Mittelachse rotationssymmetrisch. Bevorzugt ist der Innenraum bezüglich der Mittelachse rotationssymmetrisch. Insbesondere ist oder sind der Tragfederkörper und/oder die Arbeitskammer und/oder der Zentralbereich und/oder der Kragenbereich und/oder die Membran und/oder der Balg und/oder die Ausgleichskammer und/oder der Ringkörper und/oder die Durchgangsöffnung, vorzugsweise jeweils, bezüglich der Mittelachse rotationssymmetrisch. Vorteilhaft verläuft der Kanal zumindest bereichsweise oder vollständig oder wenigstens einmal oder mehrfach um die Mittelachse herum.

Gemäß einer Ausgestaltung weist die Membran, vorzugsweise im Zentralbereich, wenigstens ein, insbesondere die Steifigkeit der Membran erhöhendes, Versteifungselement auf, welches beispielsweise auf einer dem Innenraum zugewandten Seite der Membran und/oder des Zentralbereichs und/oder im Innenraum angeordnet ist. Bevorzugt weist die Membran, vorzugsweise im Zentralbereich, mehrere, insbesondere die Steifigkeit der Membran erhöhende, Versteifungselemente auf, die vorzugsweise auf einer dem Innenraum zugewandten Seite der Membran und/oder des Zentralbereichs und/oder im Innenraum angeordnet sind. Durch das Versteifungselement oder die Versteifungselemente, z.B. durch die Positionierung und/oder geometrische Ausgestaltung des oder jedes Versteifungselements oder der Versteifungselemente, ist es insbesondere möglich, das, vorzugsweise dynamische und/oder statische, Steifigkeitsverhalten des hydraulisch dämpfenden Aggregatlagers, insbesondere zusätzlich, zu beeinflussen. Das oder jedes Versteifungselement ist z.B. fest und/oder stoffschlüssig mit dem Balg und/oder mit dem Zentralbereich und/oder mit der Membran verbunden und/oder einteilig mit dem Balg und/oder mit dem Zentralbereich und/oder mit der Membran ausgebildet. Bevorzugt ist das oder jedes Versteifungselement, insbesondere in radialer Richtung, im Abstand zur Mittelachse angeordnet. Vorzugsweise erstreckt sich das oder jedes Versteifungselement in axialer Richtung. Beispielsweise erstreckt sich das oder jedes Versteifungselement, insbesondere ausgehend von der Membran, von der Membran weg. Vorteilhaft ist das oder jedes Versteifungselement, insbesondere zumindest bereichsweise, in Richtung auf die Innenwandung zu gewölbt. Somit können z.B. scharfe Kanten vermieden werden, die bei Kontakt von Innenwandung und Versteifungselement zu einer Beschädigung der Innenwandung führen könnten. Bevorzugt erstreckt sich das oder jedes Versteifungselement von dem Zentralbereich und/oder von der Membran, insbesondere axial, in den Innenraum hinein. Die Versteifungselemente sind z.B. rings der Mittelachse, insbesondere im Abstand zueinander, angeordnet. Bevorzugt besteht das oder jedes Versteifungselement aus dem Material der Membran und/oder des Zentralbereichs und/oder des Balgs. Beispielsweise besteht das oder jedes Versteifungselement aus Elastomer. Vorteilhaft ist das oder jedes Versteifungselement in Form einer Rippe ausgebildet und wird z.B. auch als Versteifungsrippe bezeichnet.

Bevorzugt weist die Membran, vorzugsweise im Zentralbereich, wenigstens ein zusätzliches Masseelement auf, welches beispielsweise auf einer dem Innenraum zugewandten Seite der Membran und/oder des Zentralbereichs und/oder im Innenraum angeordnet ist. Mit dem zusätzlichen Masseelement ist z.B. das Schwingungsverhalten der Membran beeinflussbar.

Gemäß einer Weiterbildung ist der Innenraum, insbesondere auf seiner dem Zentralbereich und/oder der Membran abgewandten Seite, zur Umgebung hin offen. Bevorzugt steht der Zentralbereich und/oder der den Zentralbereich bildende Teil der Membran, insbesondere somit, auf seiner dem Innenraum zugewandten Seite unter atmosphärischem Druck. Hierdurch ist oder sind z.B. eine geringe dynamische Steifigkeit und/oder eine höhere Dauerfestigkeit des hydraulisch dämpfenden Aggregatlagers erzielbar. Gemäß einer Alternative ist der Innenraum, insbesondere zur Umgebung hin, z.B. geschlossen. Beispielsweise bildet der Innenraum einen geschlossenen Raum. Der Innenraum weist z.B. einen von der Umgebung abweichenden Druck auf. Beispielsweise ist in den Innenraum ein Fluid eingebracht.

Der Innenraum ist z.B. durch eine Düse mit der Umgebung verbunden. Bei einer langsamen oder niederfrequenten Bewegung der Membran, lässt die Düse z.B. einen Austausch von Luft zwischen dem Innenraum und der Umgebung zu. Bei einer raschen oder hochfrequenten Bewegung der Membran wird z.B. ein Austausch von Luft zwischen dem Innenraum und der Umgebung durch die Düse blockiert. Bevorzugt bildet der Innenraum einen Freiraum.

Gemäß einer Ausgestaltung weist der Ringkörper zwei oder wenigstens zwei axial übereinander angeordnete, insbesondere ringförmige, Ringkörperteile auf. Bevorzugt ist der Kragenbereich und/oder die Membran an seinem oder ihrem Außenumfang zwischen den Ringkörperteilen befestigt und/oder festgelegt und/oder eingeklemmt. Somit ist es auf einfache Weise möglich, den Kragenbereich und/oder die Membran an dem Ringkörper zu befestigen und/oder festzulegen. Der Ringkörper und/oder jedes Ringkörperteil bildet insbesondere einen formstabilen Körper. Beispielswiese besteht der Ringkörper und/oder jedes Ringkörperteil aus Kunststoff. Alternativ ist der Ringkörper ist z.B. einteilig ausgebildet.

Gemäß einer Weiterbildung weist der Ringkörper auf einer der Arbeitskammer abgewandten Seite eine, vorzugsweise kreisförmige oder ovale, Öffnung und/oder Bohrung und/oder Vertiefung auf, in welche insbesondere die Durchgangsöffnung, vorzugsweise mittig oder radial mittig, mündet, die insbesondere einen kleineren Durchmesser und/oder kleinere Abmessungen als die Öffnung und/oder die Bohrung und/oder die Vertiefung aufweist, in welcher vorzugsweise die Membran und/oder der Kragenbereich mit dem Zentralbereich einliegt. Erfindungsgemäß können der Kragenbereich und der Zentralbereich in axialer Richtung von dem Ringkörper abheben. Durch dieses Abheben der Membran und/oder des Kragensbereichs und/oder des Zentralbereichs von dem Ringkörper ist es z.B. möglich, die Innenwandung und/oder die Aufwölbung und/oder die Einbuchtung, insbesondere elastisch, zu verformen und somit das, vorzugsweise dynamische und/oder statische, Steifigkeitsverhalten des hydraulisch dämpfenden Aggregatlagers, insbesondere zusätzlich, zu beeinflussen. Bevorzugt ist die, insbesondere kreisförmige, Öffnung und/oder Bohrung und/oder Vertiefung in oder zumindest in einem der Arbeitskammer abgewandten Ringkörperteil der Ringkörperteile vorgesehen.

Gemäß einer Ausgestaltung ist der Kanal in dem Ringkörper vorgesehen. Bevorzugt umringt der Kanal die Durchgangsöffnung zumindest bereichsweise oder vollständig oder wenigstens einmal oder mehrfach. Vorzugsweise ist der Kanal zwischen den Ringkörperteilen eingeschlossen. Vorteilhaft weist der Kanal sowohl zu der Arbeitskammer als auch zu der Ausgleichskammer eine oder wenigstens eine Öffnung auf. Der Kanal wird z.B. auch als Dämpfungskanal bezeichnet. Der Kanal ist bevorzugt durch die Ringkörperteile begrenzt. Nach radial innen ist der Kanal z.B. durch wenigstens eines der Ringkörperteile oder durch die Membran begrenzt und/oder abgedichtet.

Gemäß einer Weiterbildung weist der Tragfederkörper eine elastomere Tragfeder und zwei fest und/oder stoffschlüssig mit dieser verbundene, vorzugsweise formstabile, Anschlussteile auf, zwischen denen sich die Tragfeder, insbesondere in axialer Richtung, erstreckt. Bevorzugt ist ein erstes der Anschlussteile, insbesondere radial, mittig an der elastomeren Tragfeder und/oder oder an einem der Ausgleichskammer und/oder dem Ringkörper abgewandten Ende der Tragfeder vorgesehen. Das erste Anschlussteil wird z.B. auch als Lagerkern bezeichnet. Vorzugsweise ist ein zweites der Anschlussteile am Außenumfang der Tragfeder und/oder an einem der Ausgleichskammer und/oder dem Ringkörper zugewandten Ende der Tragfeder vorgesehen. Insbesondere ist das zweite Anschlussteil ringförmig ausgebildet. Beispielsweise ist das zweite Anschlussteil durch den Ringkörper gebildet. Bevorzugt handelt es sich bei dem zweiten Anschlussteil aber um ein separates Bauteil. Die Anschlussteile sind vorzugsweise in axialer Richtung versetzt zueinander angeordnet. Beispielsweise ist der Kragenbereich an seinem Außenumfang fest mit einem der Anschlussteile und/oder mit dem zweiten Anschlussteil verbunden.

Gemäß einer Ausgestaltung umfasst das hydraulisch dämpfende Aggregatlager ein Gehäuse, in dem insbesondere der Tragfederkörper und/oder der Ringkörper angeordnet sind. Beispielsweise ist das zweite Anschlussteil durch das Gehäuse gebildet. Bevorzugt ist oder sind das zweite Anschlussteil und/oder der Ringkörper, insbesondere zumindest mittelbar, an dem Gehäuse befestigt.

Die Arbeitskammer ist bevorzugt durch den Tragfederkörper begrenzt. Vorzugsweise ist die Arbeitskammer, insbesondere zusätzlich, durch den Ringkörper und/oder durch die Membran begrenzt.

Die Ausgleichskammer ist bevorzugt durch den Balg begrenzt. Vorzugsweise ist die Ausgleichskammer, insbesondere zusätzlich, durch den Ringkörper und/oder durch die Membran und/oder durch den Kragenbereich begrenzt. Vorteilhaft ist die Ausgleichskammer ringförmig.

Der Balg weist bevorzugt eine Außenwandung und einen, insbesondere ringförmigen Boden auf, der vorzugsweise auf einer der Arbeitskammer und/oder dem Ringkörper abgewandten Seite des Balgs vorgesehen ist. Vorteilhaft umringt die Außenwandung die Innenwandung. Bevorzugt verbindet der Boden die Innenwandung mit der Außenwandung. Die Ausgleichskammer ist vorzugsweise zwischen der Innenwandung der Außenwandung eingeschlossen. Vorteilhaft ist die Ausgleichskammer, insbesondere zusätzlich, durch die Innenwandung und/oder durch die Außenwandung und/oder durch den Boden begrenzt. Vorzugsweise ist die Ausgleichskammer, insbesondere zusätzlich, durch den Ringkörper und/oder durch die Membran und/oder durch den Zentralbereich und/oder durch den Kragbereich begrenzt.

Bevorzugt ist der Balg, z.B. auf einer der Ausgleichskammer und/oder dem Ringkörper abgewandten Seite, durch eine Balgabdeckung abgedeckt. Vorzugsweise ist der Balg, insbesondere mit seinem Boden, z.B. auf einer der Ausgleichskammer und/oder dem Ringkörper abgewandten Seite, an der oder einer Balgabdeckung axial abgestützt oder abstützbar. Bevorzugt ist der Boden relativ zu der Balgabdeckung, vorzugsweise in axialer Richtung, bewegbar.

Insbesondere ist oder sind der Boden und/oder die Innenwandung und/oder der Balg nicht an der Balgabdeckung fixiert. Alternativ ist oder sind der Boden und/oder die Innenwandung und/oder der Balg z.B. an der Balgabdeckung fixiert. Die Balgabdeckung ist beispielsweise, insbesondere unmittelbar oder zumindest mittelbar, an dem Ringkörper und/oder an dem zweiten Anschlussteil und/oder an dem Gehäuse befestigt. Bevorzugt ist der Ringkörper, insbesondere in axialer Richtung, zwischen dem zweiten Anschlussteil und der Balgabdeckung angeordnet und/oder festgelegt. Vorzugsweise ist die Balgabdeckung, beispielsweise formschlüssig und/oder durch eine Schnappverbindung, an dem zweiten Anschlussteil befestigt oder befestigbar. Die Schnappverbindung dient z.B. als Montagehilfe. Insbesondere ist die Außenwandung des Balgs mit einem der Arbeitskammer und/oder dem Ringkörper zugewandten Ende zwischen der Balgabdeckung und dem Ringkörper festgelegt und/oder eingeklemmt. Bevorzugt weist die Balgabdeckung wenigstens ein oder mehrere durchgehende Löcher auf. Somit ist z.B. ein Druckausgleich zwischen dem Inneren der Balgabdeckung und der Umgebung möglich, wenn sich das Volumen des Balgs aufgrund in ihn einströmenden Fluids oder aus ihm ausströmenden Fluids ändert. Ferner kann somit insbesondere sichergestellt werden, dass der Innenraum unter atmosphärischem Druck steht.

Die Innenwandung ist bevorzugt fest und/oder stoffschlüssig mit der Membran und/oder mit dem Zentralbereich und/oder mit dem Kragenbereich und/oder mit dem Balg verbunden. Vorzugsweise ist die Innenwandung auf einer der Durchgangsöffnung und/oder der Arbeitskammer abgewandten Seite der Membran und/oder des Zentralbereichs und/oder des Kragenbereichs angeordnet. Vorteilhaft geht die Innenwandung, insbesondere auf der oder einer der Durchgangsöffnung und/oder dem Ringkörper und/oder der Arbeitskammer abgewandten Seite der Membran und/oder des Zentralbereichs und/oder des Kragenbereichs, vorzugsweise am Außenumfang des Zentralbereichs und/oder am Innenumfang des Kragenbereichs, in den Zentralbereich und/oder in den Kragenbereich und/oder in die Membran über. Beispielsweise geht die Innenwandung, insbesondere auf der oder einer der Durchgangsöffnung und/oder dem Ringkörper und/oder der Arbeitskammer abgewandten Seite der Membran und/oder des Zentralbereichs und/oder des Kragenbereichs, am Übergang zwischen dem Zentralbereich und dem Kragenbereich in die Membran und/oder in den Zentralbereich und/oder in den Kragenbereich über. Die Membran und/oder der Zentralbereich und/oder die Innenwandung und/oder der Kragenbereich und/oder die Außenwandung und/oder der Boden und/oder das oder die Versteifungselemente ist oder sind insbesondere einteilig und/oder materialhomogen miteinander und/oder mit dem Balg ausgebildet. Somit ist es möglich, den Balg zusammen mit der Membran und/oder mit dem Zentralbereich und/oder mit der Innenwandung und/oder mit dem Kragenbereich und/oder mit der Außenwandung und/oder mit dem Boden und/oder mit dem oder den Versteifungselementen in einem Herstellungsschritt herzustellen. Der Balg und/oder die Membran und/oder der Zentralbereich und/oder die Innenwandung und/oder der Kragenbereich und/oder die Außenwandung und/oder der Boden und/oder das oder die Versteifungselemente bestehen bevorzugt aus einem Elastomer.

Das hydraulisch dämpfende Aggregatlager ist insbesondere für ein Fahrzeug vorgesehen, welches vorzugsweise ein Kraftfahrzeug ist. Bevorzugt dient das hydraulisch dämpfende Aggregatlager zur Abstützung und/oder Befestigung eines Fahrzeugmotors oder Fahrzeuggetriebes an einer Fahrzeugkarosserie.

Die Erfindung wird nachfolgend anhand einer bevorzugten Ausführungsform unter Bezugnahme auf die Zeichnung beschrieben. In der Zeichnung zeigen:
Fig. 1 eine perspektivische Ansicht eines hydraulisch dämpfenden Aggregatlagers gemäß einer Ausführungsform,
Fig. 2 eine Draufsicht auf das hydraulisch dämpfende Aggregatlager nach Fig. 1,
Fig. 3 einen Längsschnitt durch das hydraulisch dämpfende Aggregatlager entlang der aus Fig. 2 ersichtlichen Schnittlinie A - A,
Fig. 4 einen anderen Längsschnitt durch das hydraulisch dämpfende Aggregatlager entlang der aus Fig. 3 ersichtlichen Schnittlinie B - B und
Fig. 5 eine Unteransicht des hydraulisch dämpfenden Aggregatlagers nach Fig. 1.

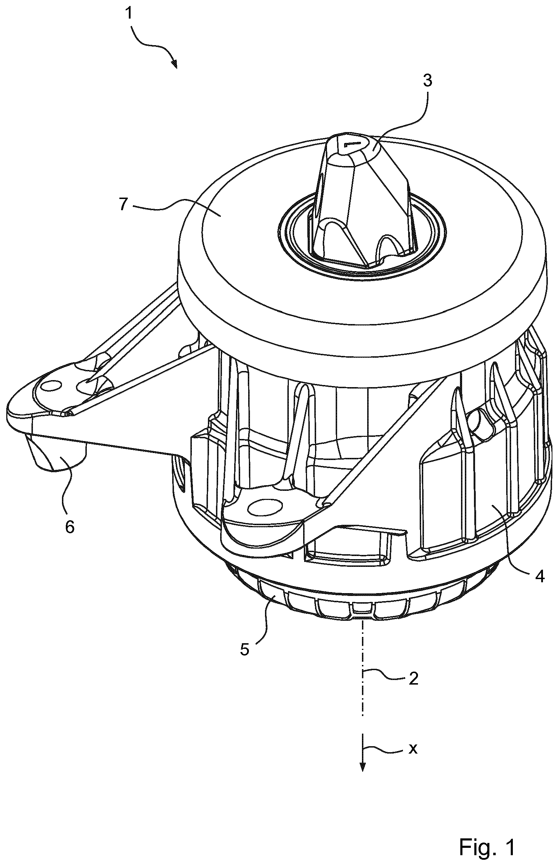

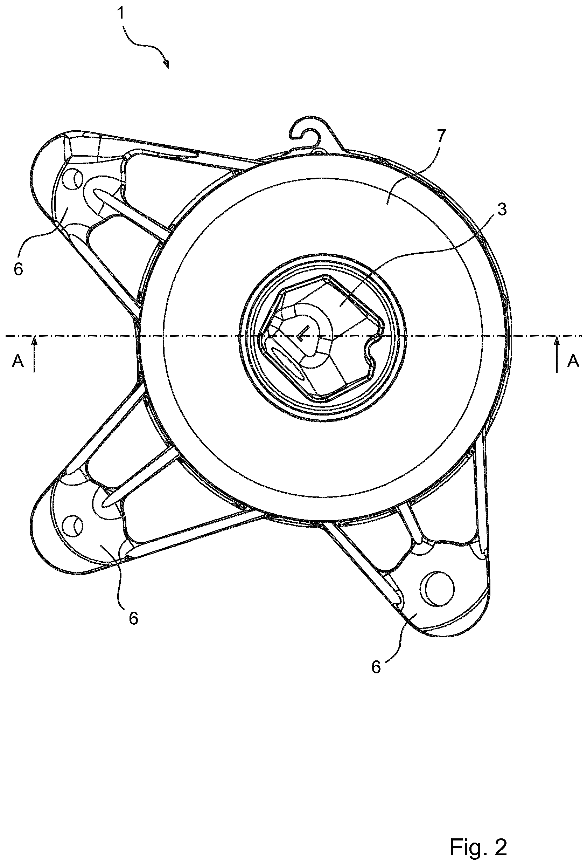

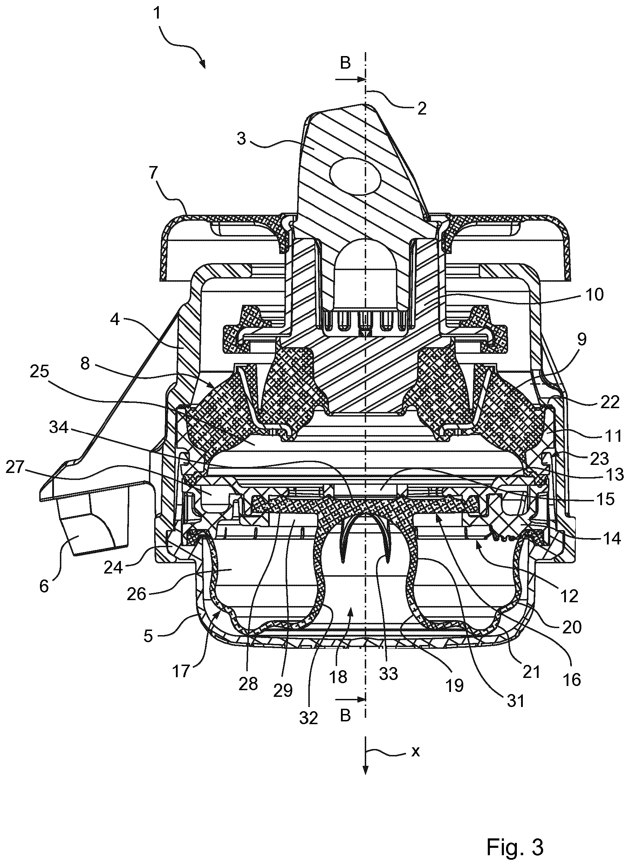

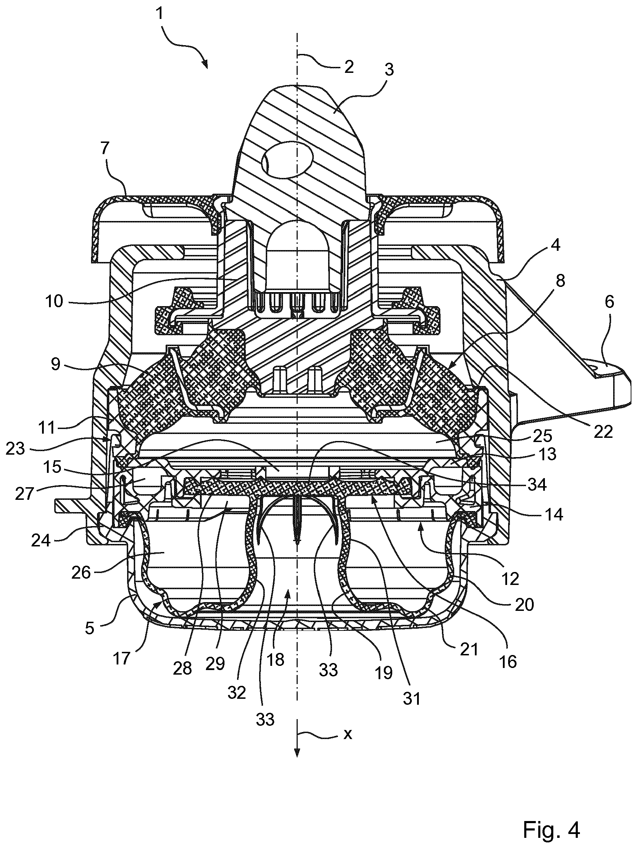

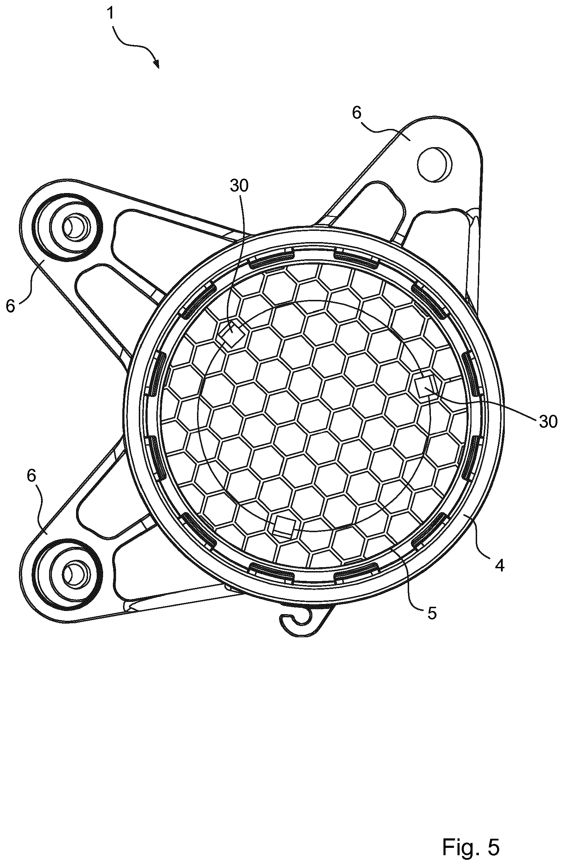

Aus den Figuren 1 bis 5 sind unterschiedliche Ansichten eines hydraulisch dämpfenden Aggregatlagers 1 gemäß einer Ausführungsform ersichtlich, dem eine in einer axialen Richtung x verlaufende Mittelachse 2 zugeordnet ist. Das hydraulisch dämpfende Aggregatlager 1 weist ein zentrales Montageelement 3 und ein Gehäuse 4 auf, das auf einer dem zentralen Montageelement 3 abgewandten Seite stirnseitig durch eine Balgabdeckung 5 verschlossen ist, in der mehrere Löcher 30 vorgesehen sind. Ferner sind an dem Gehäuse 4 zusätzliche Montageelemente 6 vorgesehen. Auch ist an dem zentralen Montageelement 3 eine dieses umringende Kappe 7 befestigt.

In dem Gehäuse 4 ist ein Tragfederkörper 8 angeordnet, der eine elastomere Tragfeder 9 und zwei fest mit dieser verbundene Anschlussteile 10 und 11 aufweist, zwischen denen sich die Tragfeder 9 in axialer Richtung x erstreckt. An einem ersten der Anschlussteile 10, welches sich insbesondere axial aus dem Gehäuse 4 heraus erstreckt, ist das zentrale Montageelement 3 befestigt. Gemäß einer möglichen Alternative ist das erste Anschlussteil 10 z.B. einstückig mit dem zentralen Montageelement 3 ausgebildet. Ein zweites der Anschlussteile 11 liegt radial an einer inneren Umfangswand des Gehäuses 4 und axial an einer radialen Innenschulter 22 des Gehäuses 4 an, sodass der Tragfederkörper 8 durch das zweite Anschlussteil 11 mit dem Gehäuse 4 verbunden ist. In axialer Richtung x ist zwischen dem Tragfederkörper 8 und der Balgabdeckung 5 ein Ringkörper 12 angeordnet, der aus zwei axial übereinander angeordneten, ringförmigen Ringkörperteilen 13 und 14 zusammengesetzt ist. Der Ringkörper 12 umschließt eine axiale Durchgangsöffnung 15, die durch eine Membran 16 verschlossen ist.

Insbesondere ist die Balgabdeckung 5, vorzugsweise im vormontierten Zustand, durch eine Schnappverbindung 23 an dem zweiten Anschlussteil 11 gesichert. Ferner ist der Ringkörper 12 zwischen dem zweiten Anschlussteil 11 und einem dem Ringkörper 12 zugewandten Rand 24 der Balgabdeckung 5 festgelegt, der wiederum an dem Gehäuse 4 festgelegt ist.

Auf einer dem Tragfederkörper 8 abgewandten Seite des Ringkörpers 12 ist ein Balg 17 vorgesehen, der eine einen Innenraum 18 umringende Innenwandung 19, eine diese umringende Außenwandung 20 und einen die Innenwandung 19 mit der Außenwandung 20 verbindenden Boden 21 aufweist, mit welchem der Balg 17 insbesondere axial an der Balgabdeckung 5 abgestützt ist. Die Außenwandung 20 ist mit ihrem dem Boden 21 abgewandten Ende zwischen dem Ringkörper 12 und der Balgabdeckung 5 festgelegt.

Der Tragfederkörper 8 umschließt eine Arbeitskammer 25, in welche die Durchgangsöffnung 15 einmündet. Ferner umschließt der Balg 17 eine ringförmige Ausgleichskammer 26, die durch den Ringkörper 12 und die Membran 16 von der Arbeitskammer 25 getrennt ist. Die Kammern 25 und 26 sind mit einem Fluid gefüllt und durch einen in dem Ringkörper 12 verlaufenden Kanal 27 hydraulisch miteinander verbunden.

Die Membran 16 umfasst einen Zentralbereich 34 und einen diesen umringenden und sich an diesen anschließenden Kragenbereich 28, der an seinem Außenumfang zwischen den Ringkörperteilen 13 und 14 an dem Ringkörper 12 festgelegt ist. Die Membran 16 und die Innenwandung 19 sind einteilig miteinander ausgebildet. Ferner sind der Zentralbereich 34 und der Kragenbereich 28 einteilig miteinander und einteilig mit dem Balg 17 ausgebildet, dessen Innenwandung 19 mit ihrem der Membran 16 zugewandten Ende an dem Übergang zwischen dem Zentralbereich 34 und dem Kragenbereich 28 mit der Membran 16 verbunden ist. Der Zentralbereich 34 und der Kragenbereich 28 bilden zusammen die Membran 16, die insbesondere einen scheibenförmigen Körper bildet.

Auf seiner der Arbeitskammer 25 abgewandten Seite weist der Ringkörper 12 eine, vorzugsweise kreisförmige, Vertiefung 29 auf, in welche die Durchgangsöffnung 15, bevorzugt mittig, mündet, die insbesondere einen kleineren Durchmesser als die Vertiefung 29 aufweist, in welcher die Membran 16 einliegt. Die Membran 16 begrenzt zusammen mit der Innenwandung 19 den Innenraum 18, der auf seiner der Membran 16 abgewandten Seite zur Umgebung hin offen ist. Die Mittelachse 2 bildet auch eine Mittelachse des Innenraums 18.

Die Innenwandung 19 weist in axialer Richtung x eine um die Mittelachse 2 herum verlaufende Ausbeulung 31 und eine sich an diese anschließende und um die Mittelachse 2 herum verlaufende Einbuchtung 32 auf. Ferner sind in dem Innenraum Versteifungselemente 33 in Form von Rippen vorgesehen, die sich von dem Zentralbereich 24 der Membran 16 axial in den Innenraum 18 hineinerstrecken.

### Bezugszeichenliste

- 1: hydraulisch dämpfendes Aggregatlager
- 2: Mittelachse
- 3: zentrales Montageelement
- 4: Gehäuse
- 5: Balgabdeckung
- 6: zusätzliches Montageelement
- 7: Kappe
- 8: Tragfederkörper
- 9: Tragfeder
- 10: erstes Anschlussteil
- 11: zweites Anschlussteil
- 12: Ringkörper
- 13: Ringkörperteil
- 14: Ringkörperteil
- 15: Durchgangsöffnung
- 16: Membran
- 17: Balg
- 18: Innenraum
- 19: Innenwandung des Balgs
- 20: Außenwandung des Balgs
- 21: Boden des Balgs
- 22: Innenschulter des Gehäuses
- 23: Schnappverbindung
- 24: Rand der Balgabdeckung
- 25: Arbeitskammer
- 26: Ausgleichskammer
- 27: Kanal
- 28: Kragenbereich der Membran
- 29: Vertiefung
- 30: Loch in Balgabdeckung
- 31: Ausbeulung
- 32: Einbuchtung
- 33: Anschlag
- 34: Zentralbereich der Membran
- x: axiale Richtung

## Patentansprüche

1. Hydraulisch dämpfendes Aggregatlager mit zwei in einer axialen Richtung (x) einander gegenüberliegenden, mit Fluid gefüllten und durch wenigstens einen Kanal (27) hydraulisch miteinander verbundenen Kammern, von denen eine erste Kammer eine von einem Tragfederkörper (8) umschlossene Arbeitskammer (25) und eine zweite Kammer eine von einem Balg (17) umschlossene Ausgleichskammer (26) bildet, der eine einen Innenraum (18) umringende und sich in axialer Richtung (x) erstreckende Innenwandung (19) aufweist, und einem in axialer Richtung (x) zwischen der Arbeitskammer (25) und der Ausgleichskammer (26) angeordneten Ringkörper (12), der eine in die Arbeitskammer (25) einmündende axiale Durchgangsöffnung (15) umschließt, die von einer einteilig mit der Innenwandung (19) des Balgs (17) ausgebildeten Membran (16) verschlossen ist, die einen durch die Innenwandung (19) definierten Zentralbereich (34) aufweist, der zusammen mit der Innenwandung (19) den Innenraum (18) begrenzt, wobei die Membran (16) einen den Zentralbereich (34) umringenden und einteilig mit diesem ausgebildeten Kragenbereich (28) aufweist, der an seinem Außenumfang fest mit dem Ringkörper (12) und/oder dem Tragfederkörper (8) verbunden ist, **dadurch gekennzeichnet, dass** die Membran (16) scheibenförmig ausgebildet und in axialer Richtung (x) gegenüber dem Ringkörper (12) bewegbar ist, wobei der Zentralbereich (34) und der Kragenbereich (28) gemeinsam die Membran (16) bilden und in axialer Richtung (x) von dem Ringkörper (12) abheben können.

2. Hydraulisch dämpfendes Aggregatlager nach Anspruch 1, **dadurch gekennzeichnet, dass** die Innenwandung (19) wenigstens eine um eine axiale Mittelachse (2) des Innenraums (18) herum verlaufende Ausbeulung (31) aufweist.

3. Hydraulisch dämpfendes Aggregatlager nach Anspruch 2, **dadurch gekennzeichnet, dass** die Innenwandung (19) wenigstens eine sich axial an die Ausbeulung (31) anschließende und um die Mittelachse (2) herum verlaufende Einbuchtung (32) aufweist.

4. Hydraulisch dämpfendes Aggregatlager nach einem der vorangehenden Ansprüche, **dadurch gekennzeichnet, dass** die Membran (16) wenigstens ein die Steifigkeit der Membran (16) erhöhendes Versteifungselement (33) aufweist, welches auf einer dem Innenraum (18) zugewandten Seite der Membran (16) angeordnet ist.

5. Hydraulisch dämpfendes Aggregatlager nach einem der vorangehenden Ansprüche, **dadurch gekennzeichnet, dass** der Innenraum (18) auf seiner der Membran (16) abgewandten Seite zur Umgebung hin offen ist.

6. Hydraulisch dämpfendes Aggregatlager nach einem der vorangehenden Ansprüche, **dadurch gekennzeichnet, dass** die Membran (16) in axialer Richtung (x) relativ zu dem Ringkörper (12) schwingungsfähig ist.

7. Hydraulisch dämpfendes Aggregatlager nach einem der vorangehenden Ansprüche, **dadurch gekennzeichnet, dass** der Ringkörper (12) zwei axial übereinander angeordnete, ringförmige Ringkörperteile (13, 14) aufweist, zwischen denen der Kragenbereich (28) an seinem Außenumfang festgelegt ist.

8. Hydraulisch dämpfendes Aggregatlager nach einem der vorangehenden Ansprüche, **dadurch gekennzeichnet, dass** der Ringkörper (12) auf einer der Arbeitskammer (25) abgewandten Seite eine Vertiefung (29) aufweist, in welche die Durchgangsöffnung (15) mündet.

9. Hydraulisch dämpfendes Aggregatlager nach den Ansprüchen 7 und 8, **dadurch gekennzeichnet, dass** die Vertiefung (29) zumindest in einem der Arbeitskammer (25) abgewandten Ringkörperteil (14) der Ringkörperteile (13, 14) vorgesehen ist.

10. Hydraulisch dämpfendes Aggregatlager nach einem der vorangehenden Ansprüche, **dadurch gekennzeichnet, dass** der Kanal (27) in dem Ringkörper (12) vorgesehen ist.

11. Hydraulisch dämpfendes Aggregatlager nach einem der vorangehenden Ansprüche, **dadurch gekennzeichnet, dass** der Tragfederkörper (8) eine elastomere Tragfeder (9) und zwei fest mit diesem verbundene, formstabile Anschlussteile (10, 11) aufweist, zwischen denen sich die Tragfeder (9) in axialer Richtung (x) erstreckt.

12. Hydraulisch dämpfendes Aggregatlager nach einem der vorangehenden Ansprüche, **dadurch gekennzeichnet, dass** der Zentralbereich (34) und der Kragenbereich (28) auf einer der Arbeitskammer (25) abgewandten Seite der Durchgangsöffnung (15) angeordnet sind.

13. Hydraulisch dämpfendes Aggregatlager nach Anspruch 8, **dadurch gekennzeichnet, dass** der Kragenbereich (28) mit dem Zentralbereich (34) in der Vertiefung (29) einliegt.

## Claims

1. Hydraulically damping assembly mount comprising two chambers which are opposite one another in an axial direction (x), are filled with fluid, are hydraulically connected to one another by at least one channel (27) and of which a first chamber forms a working chamber (25) enclosed by a load-bearing spring body (8) and a second chamber forms a compensation chamber (26) which is enclosed by a bellows (17) and which has an inner wall (19) surrounding an interior space (18) and extending in the axial direction (x), and a ring body (12) which is arranged in the axial direction (x) between the working chamber (25) and the compensation chamber (26) and which encloses an axial through-opening (15) which opens into the working chamber (25) and which is closed by a diaphragm (16) which is formed integrally with the inner wall (19) of the bellows (17) and which has a central region (34) which is defined by the inner wall (19) and which, together with the inner wall (19), delimits the interior space (18), wherein the diaphragm (16) has a collar region (28) which surrounds the central region (34) and is formed integrally therewith and which is firmly connected at its outer circumference to the ring body (12) and/or the load-bearing spring body (8), **characterised in that** the diaphragm (16) is disc-shaped and movable in the axial direction (x) relative to the ring body (12), wherein the central region (34) and the collar region (28) together form the diaphragm (16) and can lift away from the ring body (12) in the axial direction (x).

2. Hydraulically damping assembly mount according to claim 1, **characterised in that** the inner wall (19) has at least one bulge (31) running around an axial central axis (2) of the interior space (18).

3. Hydraulically damping assembly mount according to claim 2, **characterised in that** the inner wall (19) has at least one indentation (32) axially adjoining the bulge (31) and running around the central axis (2).

4. Hydraulically damping assembly mount according to any one of the preceding claims, **characterised in that** the diaphragm (16) has at least one stiffening element (33) which increases the rigidity of the diaphragm (16) and which is arranged on a side of the diaphragm (16) facing the interior space (18).

5. Hydraulically damping assembly mount according to any one of the preceding claims, **characterised in that** the interior space (18) is open towards the surrounding area on its side facing away from the diaphragm (16).

6. Hydraulically damping assembly mount according to any one of the preceding claims, **characterised in that** the diaphragm (16) is capable of oscillating in the axial direction (x) relative to the ring body (12).

7. Hydraulically damping assembly mount according to any one of the preceding claims, **characterised in that** ring body (12) comprises two annular ring body parts (13, 14) which are arranged axially one above the other and between which the collar region (28) is fixed at its outer circumference.

8. Hydraulically damping assembly mount according to any one of the preceding claims, **characterised in that** the ring body (12) has, on a side facing away from the working chamber (25), a depression (29) into which the through-opening (15) opens.

9. Hydraulically damping assembly mount according to claims 7 and 8, **characterised in that** the depression (29) is provided at least in a ring body part (14) of the ring body parts (13, 14) facing away from the working chamber (25).

10. Hydraulically damping assembly mount according to any one of the preceding claims, **characterised in that** the channel (27) is provided in the ring body (12).

11. Hydraulically damping assembly mount according to any one of the preceding claims, **characterised in that** the load-bearing spring body (8) comprises an elastomeric load-bearing spring (9) and two dimensionally stable connecting parts (10, 11) which are firmly connected thereto and between which the load-bearing spring (9) extends in the axial direction (x).

12. Hydraulically damping assembly mount according to any one of the preceding_{1/5} claims, **characterised in that** the central region (34) and the collar region (28) are arranged on a side of the through-opening (15) facing away from the working chamber (25).

13. Hydraulically damping assembly mount according to claim 8, **characterised in that** the collar region (28) lies with the central region (34) in the depression (29).

## Revendications

1. Palier de groupe à amortissement hydraulique avec deux chambres opposées l'une à l'autre dans une direction axiale (x), remplies de fluide et reliées hydrauliquement l'une à l'autre par au moins un canal (27), dont une première chambre forme une chambre de travail (25) entourée par un corps de ressort de suspension (8) et une deuxième chambre une chambre de compensation (26) entourée par un soufflet (17), qui présente une paroi intérieure (19) encerclant un espace intérieur (18) et s'étendant dans la direction axiale (x), et un corps annulaire (12) disposé dans la direction axiale (x) entre la chambre de travail (25) et la chambre de compensation (26), qui entoure une ouverture de passage axiale (15) débouchant dans la chambre de travail (25), qui est fermée par une membrane (16) réalisée d'une seule pièce avec la paroi intérieure (19) du soufflet (17), qui présente une zone centrale (34) définie par la paroi intérieure (19), qui délimite, avec la paroi intérieure (19), l'espace intérieur (18), dans lequel la membrane (16) présente une zone de collerette (28) encerclant la zone centrale (34) et réalisée d'une seule pièce avec celle-ci, qui est reliée de manière fixe sur sa périphérie extérieure au corps annulaire (12) et/ou au corps de ressort de suspension (8), **caractérisé en ce que** la membrane (16) est réalisée en forme de disque et mobile dans la direction axiale (x) par rapport au corps annulaire (12), dans lequel la zone centrale (34) et la zone de collerette (28) forment ensemble la membrane (16) et peuvent se soulever du corps annulaire (12) dans la direction axiale (x).

2. Palier de groupe à amortissement hydraulique selon la revendication 1, **caractérisé en ce que** la paroi intérieure (19) présente au moins un renflement (31) s'étendant autour d'un axe médian (2) axial de l'espace intérieur (18).

3. Palier de groupe à amortissement hydraulique selon la revendication 2, **caractérisé en ce que** la paroi intérieure (19) présente au moins un renfoncement (32) se raccordant axialement au renflement (31) et s'étendant autour de l'axe médian (2).

4. Palier de groupe à amortissement hydraulique selon l'une quelconque des revendications précédentes, **caractérisé en ce que** la membrane (16) présente au moins un élément de rigidification (33) augmentant la rigidité de la membrane (16), lequel est disposé sur un côté de la membrane (16) tourné vers l'espace intérieur (18).

5. Palier de groupe à amortissement hydraulique selon l'une quelconque des revendications précédentes, **caractérisé en ce que** l'espace intérieur (18) est ouvert vers l'environnement sur son côté opposé à la membrane (16).

6. Palier de groupe à amortissement hydraulique selon l'une quelconque des revendications précédentes, **caractérisé en ce que** la membrane (16) est capable d'osciller dans la direction axiale (x) par rapport au corps annulaire (12).

7. Palier de groupe à amortissement hydraulique selon l'une quelconque des revendications précédentes, **caractérisé en ce que** le corps annulaire (12) présente deux parties de corps annulaire (13, 14) disposées axialement l'une au-dessus de l'autre, entre lesquelles la zone de collerette (28) est fixée sur sa périphérie extérieure.

8. Palier de groupe à amortissement hydraulique selon l'une quelconque des revendications précédentes, **caractérisé en ce que** le corps annulaire (12) présente, sur un côté opposé à la chambre de travail (25), un évidement (29) dans lequel débouche l'ouverture de passage (15).

9. Palier de groupe à amortissement hydraulique selon les revendications 7 et 8, **caractérisé en ce que** l'évidement (29) est prévu au moins dans une partie de corps annulaire (14) des parties de corps annulaire (13, 14) opposée à la chambre de travail (25).

10. Palier de groupe à amortissement hydraulique selon l'une quelconque des revendications précédentes, **caractérisé en ce que** le canal (27) est prévu dans le corps annulaire (12).

11. Palier de groupe à amortissement hydraulique selon l'une quelconque des revendications précédentes, **caractérisé en ce que** le corps de ressort de suspension (8) présente un ressort de suspension élastomère (9) et deux parties de raccordement (10, 11) indéformables, reliées de manière fixe à celui-ci, entre lesquelles le ressort de suspension (9) s'étend dans la direction axiale (x).

12. Palier de groupe à amortissement hydraulique selon l'une quelconque des revendications précédentes, **caractérisé en ce que** la zone centrale (34) et la zone de collerette (28) sont disposées sur un côté de l'ouverture de passage (15) opposé à la chambre de travail (25).

13. Palier de groupe à amortissement hydraulique selon la revendication 8, **caractérisé en ce que** la zone de collerette (28) se trouve avec la zone centrale (34) dans l'évidement (29).
